# EUROPEAN PATENT APPLICATION

(11) **EP 4 098 866 A1**
(43) Date of publication of application: **07.12.2022**
(21) Application number: 21177752.9
(22) Date of filing: 04.06.2021
(51) Int. Cl.: F03D 13/10, B66C 3/00

(54) **WIND TURBINE BLADE HANDLING TOOL AND METHOD FOR HANDLING OF A WIND TURBINE BLADE**

(71) Applicant: Siemens Gamesa Renewable Energy A/S, 7330 Brande (DK)
(72) Inventor: Ludvigsen, Jesper, 8600 Silkeborg (DK); Madsen, Jonas, 6731 Tjæreborg (DK); Ringgaard, Jesper Dommerby, 7400 Herning (DK)
(74) Representative: SGRE-Association

(57) **Abstract**

Wind turbine blade handling tool comprising at least one supporting segment (7) for supporting a surface portion (8) of an outer surface (9) of the blade (2) during handling of the wind turbine blade (2), wherein the supporting segment (7) comprises at least one deformable protection pad (17), which is deformable in such manner that at least one blade add-on element (12) protruding from the supported surface portion (8) is completely accommodated in the deformed protection pad (17) .

## Description

The invention relates to a wind turbine blade handling tool comprising at least one supporting segment for supporting a surface portion of an outer surface of the blade during handling of the wind turbine blade. Furthermore, the invention relates to a method for handling of a wind turbine blade.

Handling of wind turbine blades is a special challenge due to the size and the structure of the blades. Blade handling refers in particular to lifting, turning, transportation, installation and storage of wind turbine blades and may require the usage of wind turbine blade handling tools for various purposes.

To enhance the aerodynamic properties of wind turbine blades, it is known to provide add-on elements to the outer surface of the wind turbine blade. It is desired to mount the add-on elements on the outer surface of the blade already during the production of the wind turbine blade in order to reduce the effort during installation of the wind turbine blade. However, since these add-on elements may protrude from the outer surface of the wind turbine blade, they are prone to be damaged during the subsequent handling of the wind turbine blade, in particular when they come into contact with a wind turbine blade handling tool used for the handling of the wind turbine blade.

Several factors, such as increasing blade length, increasing blade mass, the development of blade designs and their accompanying aerodynamic add-on elements as well as changes in the methods used for orienting the wind turbine blades during handling, may cause conflicts between the handling equipment and the aerodynamic add-on elements more frequently in the future.

Therefore, it is an object of the invention to provide an improved wind turbine blade handling tool, which avoids or at least reduces the risk of damaging a wind turbine blade add-on element during the handling of the blade.

According to the invention, this object is solved by a wind turbine blade handling tool as initially described, wherein the supporting segment comprises at least one deformable protection pad, which is deformable in such manner that at least one blade add-on element protruding from the support surface portion is completely accommodated in the deformed protection pad.

The wind turbine blade handling tool, which is denoted in the following also as handling tool, comprises at least one supporting segment. The supporting segment is used for supporting a surface portion of the outer surface of the wind turbine blade during handling of the blade. The handling tool can support the wind turbine blade with one or more supporting segments during blade handling, in particular during lifting, turning, transportation, installation and/or storage of the wind turbine blade.

Since the supporting segment supports a part of the outer surface of the wind turbine blade, the wind turbine blade is in direct contact with the supporting segment. Due to the loads applied to the wind turbine blade during handling, an aerodynamic add-on element protruding from the supported surface portion may be damaged when it comes into contact with the supporting segment.

By the at least one deformable protection pad of the supporting segment, it becomes possible that and add-on element protruding from the supported surface portion is completely accommodated in the deformed protection pad. The protection pad may deform for instance when the handling tool is coupled to the wind turbine blade at the beginning of a blade handling procedure, in particular when the wind turbine blade is supported on the wind turbine blade handling tool.

The protection pad may be a soft pad and deforms in such manner that one or more add-on elements arranged in the supported surface portion of the wind turbine blade are accommodated in the deformed protection pad. In particular, a protruding add-on element may be fully encompassed and therefore entirely surrounded by the deformed protection pad when it is accommodated in the protection pad. This prevents that loads, which may cause a braking or an unintended bending of the add-on element, are induced into the add-on element. It is possible that the handling tool comprises a plurality of supporting segments, depending on the shape and/or the geometry of the handling tool. In this case, the one or more of the supporting segments may each comprise at least one protection pad.

Preferably, the protection pad is deformable in such manner that at least one vane of a vortex generator is completely accommodated in the deformed protection pad. A vortex generator comprising one or more vanes as aerodynamic add-on elements may be used on a wind turbine blade for enhancing the aerodynamical properties of the blade. The vortex generator may consist of a flat base plate with a plurality of thin vanes, which protrude from the base plate and therefore also from the outer surface of the wind turbine blade, to which the base plate of the vortex generator is attached. These vanes or fins of the vortex generator may have a triangular or rectangular shape. Due to the comparatively thin geometry of the vanes and their perpendicular or essentially perpendicular orientation to the base plate, or the blade outer surface, respectively, they are inherently prone to deform, to bend, or to brake off once compressive and/or shear forces are applied to them. This may apply analogously to other types of add-on elements as well.

The optimal positioning of aerodynamic add-on elements, in particular of vortex generators, on the outer surface of the wind turbine blade may depend on the size and the shape of the wind turbine blade. The areas, in which the maximum effect of aerodynamic add-on elements may be obtained, may overlap with one or more surface portions of the blade, which are used for blade handling and therefore supported on a supporting segment of a handling tool during blade handling. This may apply for instance to surface portions which are arranged opposite to a web structure or the like in the interior of the blade, since these surface portions may be suitable both for supporting the blade during handling and for arrangement of the add-on elements.

By providing the protection pad on the supporting segment, it becomes possible to support a wind turbine blade also in a surface portion, in which aerodynamic add-on elements, for instance vortex generators or other types of add-on elements, have been arranged. This allows advantageously to handle wind turbine blades, which have aerodynamic add-on elements arranged also within the surface regions that are used during the blade handling procedures. In particular, the usage of the deformable protection pad allows advantageously for transferring all forces through the supported surface portion, since the at least one protection pad is able to take the loads during the handling procedure.

In particular, this allows to use and to handle wind turbine blades with aerodynamic add-on elements arranged in the optimal positions, independently on whether they conflict with the surface portions used for blade handling or not. This has the advantage that the wind turbine blades may be designed aerodynamically more efficient and with a more robust aerodynamic performance.

By avoiding damage to the at least one add-on element, repair procedures after the blade handling, in particular repair or exchange of damaged add-on elements, may be avoided. Such repair procedures tend to be tedious and comparatively costly, since they have to be conducted in a state, in which the wind turbine blade has already been mounted to the hub of a wind turbine.

The usage of the at least one deformable protection pad on the supporting segment of the handling tool allows for installation of the add-on element already in the factory during the wind turbine blade fabrication, on the factory yard after the blade fabrication and/or prior to hoisting the blade for installation on a wind turbine blade. Therefore, also the installation process of the add-on elements is facilitated. Furthermore, also the blade handling procedures using the handling tool are facilitated, since less care has to be taken to avoid damaging the aerodynamic add-on elements of the handled wind turbine blade.

In a preferred embodiment, the protection pad comprises a material, which is elastically deformable and/or permanently deformable by the add-on element of the supported surface portion. The protection pad may be elastically deformed when the wind turbine blade is supported on the supporting segment of the handling tool, or on the protection pad, respectively. The add-on element protruding from the surface may deform the protection pad elastically and/or plastically during arrangement of the handling tool on the wind turbine blade, so that the add-on element is completely accommodated in the deformed protection pad.

Depending on the material used for the protection pad, it is possible that the protection pad is comparatively soft so that it is compressed when the wind turbine blade is supported on the handling tool. In this case, the add-on element, for example the vane of a vortex generator, is completely accommodated in the protection pad in the compressed state of the protection pad.

The usage of an elastically deformable protection pad allows to reuse the protection pad in a plurality of blade handling procedures, since the protection pad returns at least partly in its original shape once the supported wind turbine blade has been removed from the supporting segment. However, it is also possible to use a permanently deformable protection pad, which is plastically deformed for accommodating the add-on element. It is in particular possible that an add-on element like a vane of a vortex generator punches a hole and/or a slit or the like into the protection pad when the wind turbine blade is supported on the handling tool. In this case, the number of usages of the protection pad is limited so that the protection pads are sacrificial elements which have to be exchanged after some blade handling procedures.

Preferably, the protection pad consists of an expanded polymer material. The expanded polymer material may be for instance a solidified polymer foam. Depending on the structure of the material, it may be more or less compressible when a wind turbine blade is supported on the handling tool.

Preferably, the protection pad consists of polyurethane and/or polystyrene. The usage of polyurethane and/or polystyrene allows the manufacturing of comparatively cheap and robust protection pads.

In a preferred embodiment, the protection pad comprises a thickness between 10 mm and 150 mm, in particular between 40 mm and 100 mm. The thickness of the protection pad refers to the state, in which the wind turbine blade is not supported, since the material may be compressed during handling of the wind turbine blade as previously described. Such a thickness is in particular suitable to accommodate an add-on element like a vane of a vortex generator also in a compressed state of the protection pad. For example, the length of the vortex generator perpendicular to the outer surface of the wind turbine blade may be in the range of only a few centimeters and therefore smaller than the thickness of the protection pad in its compressed state.

Preferably, the supporting segment is covered by the protection pad. By providing a supporting segment, which is covered by the protection pad, or by a plurality of protection pads, respectively, the coupling between the handling tool and the wind turbine blade is facilitated since the add-on element may be protected all over the supporting segment. In particular, the at least one protection pad is arranged in such manner that it covers at least the entire contact surface of the supporting segment, which comes into direct contact with the wind turbine blade during blade handling.

In a preferred embodiment, the protection pad is releasably attached on the supporting segment. This facilitates an exchange of the protection pad, for instance when it has been deformed plastically several times.

In a preferred embodiment of the invention, the wind turbine blade handling tool is a lifting yoke, a turning yoke, a clamp, a sling, a wind turbine blade fixture and/or a wind turbine blade storage support element. The wind turbine blade handling tool may comprise for instance a clamp-shape, in which two or more supporting segments encompass at least a portion of the outer circumference of the wind turbine blade. In this case, one or more of the supporting segments may comprise at least one protection pad.

In a method according to the invention for handling of a wind turbine blade comprising at least one blade add-on element protruding from a surface portion of an outer surface of the blade, a wind turbine blade handling tool comprising a supporting segment for supporting the surface portion of the blades during handling is used, wherein a protection pad is arranged on the supporting segment, wherein the protection pad is deformed in such manner that the blade add-on element is completely accommodated in the deformed protection pad. The protection pad used for accommodating the add-on element may be attached to the supporting segment of the blade handling tool or it may be arranged in between the supporting segment for supporting the wind turbine blade on the handling tool. It is in particular possible that a wind turbine blade handling tool according to the invention is used in the method according to the invention for handling of a wind turbine blade.

All details and advantages described in relation to the wind turbine blade handling tool apply correspondingly to the method for handling of a wind turbine blade and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a first embodiment of a wind turbine blade handling tool according to the invention,
- Fig. 2: a schematical depiction of a wind turbine,
- Fig. 3: a vortex generator of a wind turbine blade,
- Fig. 4: a cross-sectional view of the first embodiment of the wind turbine blade handling tool according to the invention, and
- Fig. 5: a second embodiment of a wind turbine blade handling tool according to the invention.

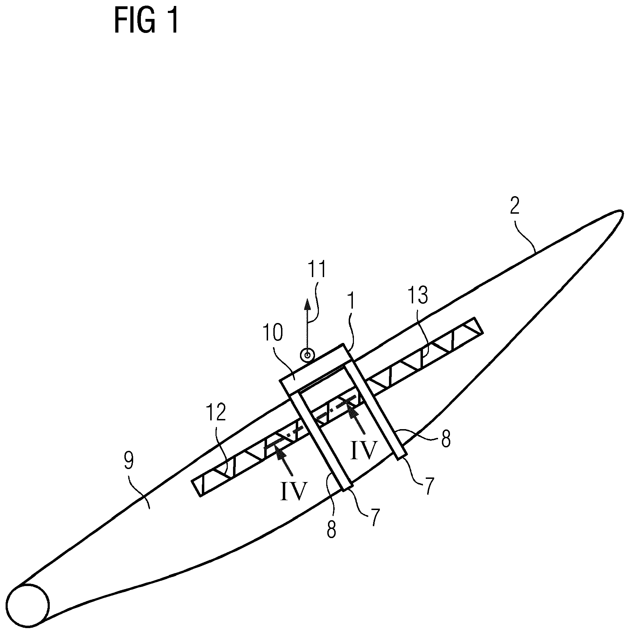

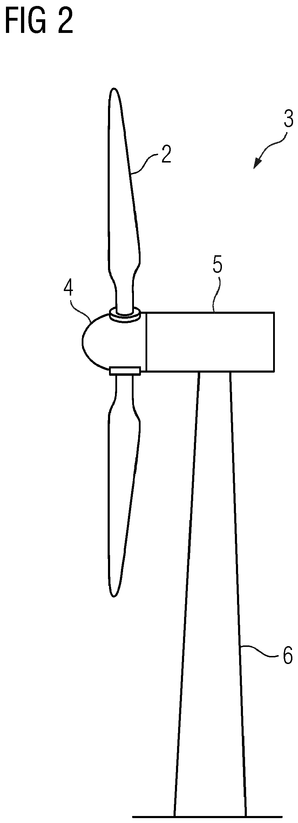

In fig. 1, an embodiment of a wind turbine blade handling tool 1 is shown. The wind turbine blade handling tool 1 may be used for lifting a wind turbine blade 2, for instance during installation of a wind turbine 3 as schematically depicted in fig. 2. The wind turbine 3 comprises a plurality of wind turbine blades 2, which are attached to a hub 4 of the wind turbine 1. The hub 4 is mounted to a nacelle 5 of the wind turbine 3, wherein the nacelle 5 is supported by a tower 6 of the wind turbine 3. During installation of the wind turbine 3, the wind turbine blades 2 have to be lifted to the hub 4. In addition to the lifting, also a turning of the wind turbine blades 2 may be required to allow for attaching a root-side end of the blade 2 to the hub 4. For the lifting and/or the turning of the blade 2, for instance the wind turbine handling tool 1 may be used.

As can be seen in fig. 1, the wind turbine blade handling tool 1 comprises two supporting segments 7, which each support a surface portion 8 of an outer surface 9 of the wind turbine blade 2. In this embodiment, the handling tool 1 is a lifting yoke used for lifting the wind turbine blade 2. The supporting segments 7 are attached to a connecting segment 10, which may be attached to a hoist 11 for lifting of the wind turbine blade 2.

The wind turbine blade 2 comprises a plurality of add-on elements 12, which are arranged in an area 13 of the outer surface 9 of the wind turbine blade 2. Also in the surface portions 8, which are supported on the supporting segments 7 of the wind turbine blade 1, add-on elements 12 are arranged. The add-on elements 12 may be for instance vanes 15 of one or more vortex generators 14.

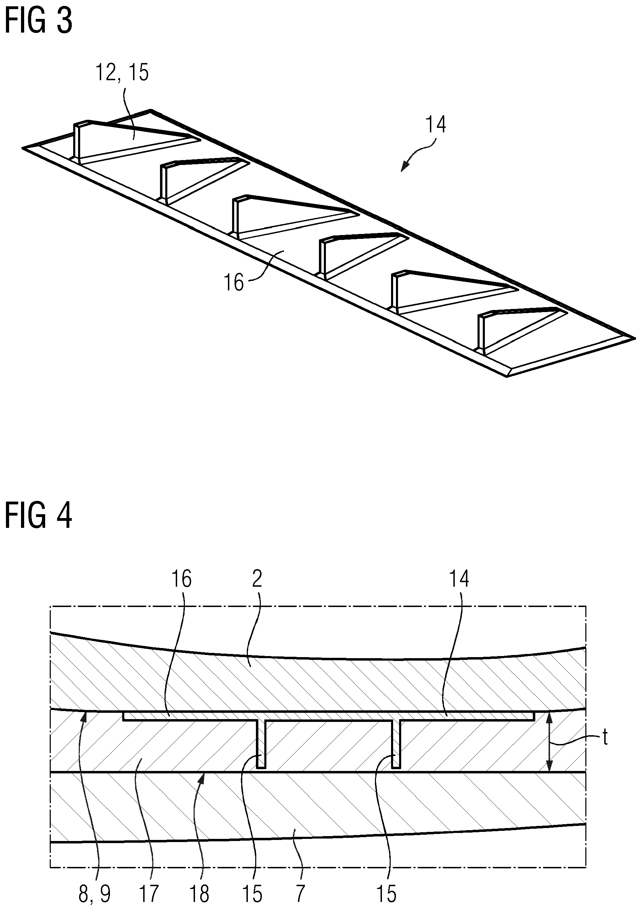

In fig. 3, a vortex generator 14 is shown. The vortex generator 14 comprises a plurality of vanes 15 as aerodynamical add-on elements 12. The vanes 15 are attached to a base plate 16 of the vortex generator 14, wherein the vanes 15 protrude perpendicular from the base plate 16 and hence perpendicular from the outer surface 9 of the wind turbine blade 2. The vanes 15, or the aerodynamical add-on elements 12, respectively, each comprise a triangular fin-shape and enhance the aerodynamic properties of the wind turbine blade 2 during operation of the wind turbine 3. However, since the surface portions 8 are supported on the supporting segment 7 of the handling tool 1, the vanes 15 are prone to be damaged during a handling procedure like the lifting of the wind turbine blade 2.

Therefore, the supporting segments 7 of the handling tool 1 each comprise at least one deformable protection pad 17, as it is depicted in the cross-sectional view of the handling tool 1 in fig. 4. The surface portions 8 of the outer surface 9 of the wind turbine blade 2 are supported on the supporting segments 7 of the handling tool 1. The protection pad 17, which is arranged on the depicted supporting segment 7, is deformable in such manner that at least one blade add-on element 12 protruding from the supported surface portion 8 is completely accommodated in the deformed protection pad 17.

In this embodiment, two vanes 15 of the vortex generators 14 are depicted, wherein the vanes 15 are completely accommodated in the deformed protection pad 17. By the protection pads 17, the vanes 15 of the vortex generator 14 are protected during the handling procedure since they are fully encompassed by the deformed protection pad 17. This avoids the occurrence of damage to the vanes 15 and prevents in particular a deformation, a bending and/or a braking of the vanes 15 while transferring all forces through the supported surface portion 8.

The protection pad 17 consists of an elastically deformable and/or a permanently deformable material. For instance, the protection pad 17 may consist of an expanded polymer material, in particular of polyurethane and/or polystyrene. A protection pad 17 made for example from a polyurethane foam may be elastically deformable, so that the protection pad 17 returns into its original shape once the supported wind turbine blade 2 has been removed from the handling tool 1 or vice versa.

In an alternative, the protection pad 17 may be manufactured from expanded polystyrene (EPS), which is plastically deformed, or permanently deformed, respectively, when the wind turbine blade 2 is supported on the protection pad 17, or the supporting segment 7, respectively. In this case, the vanes 15 of the vortex generator 14 may punch a hole, or a triangular slit, respectively, into the protection pad 17, when the surface portion 8 of the wind turbine blade 2 is supported on the supporting segment 7 of the handling tool 1.

The protection pad 17 may be releasably attached to the supporting segment 17, so that it may be replaced after a plurality of handling procedures. The contact surface 18 of the supporting segments 7, which is directed to the supported surface portion 8 of the wind turbine blade 2, may be entirely or partly covered by one or more protection pads 17. In case that only a portion of the surface 18 of the supporting segment 7 is covered by one or more protection pads 17, it is possible that the one or more protection pads 17 are accommodated in at least one recess of the surface 18, so that the entire supported surface portion 8 of the wind turbine blade 2 may be supported on the supporting segment 7 and the deformable protection pads 17.

The protection pad 17 has a thickness t between 10 mm and 150 mm, in particular between 40 mm and 100 mm. The thickness of the protection pad 17 refers to a state, in which the wind turbine blade 2 is not supported on the handling tool 1, since the protection pad 17 may be compressed during the handling of the wind turbine blade 2. In particular, when the protection pad 17 consists of an expanded polymer, the protection pad is comparatively soft so that a compression of the protection pad 17 may occur as part of the deformation when the wind turbine blade 2 is supported on the handling tool 1. In this case, the add-on elements 12, or the vanes 15 of the vortex generator 14, respectively, are fully accommodated in the protection pad 17 also in the compressed state of the protection pad 17.

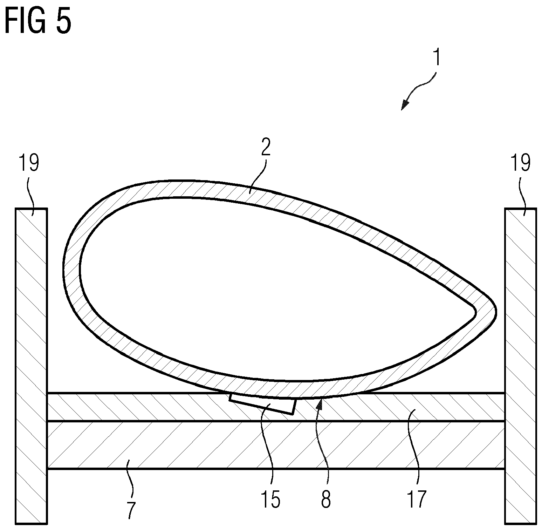

In fig. 5, a second embodiment of the wind turbine blade handling tool 1 is shown. In this embodiment, the handling tool 1 is a wind turbine blade storage support element. The handling tool 1 comprises one supporting segment 7, which supports a surface portion 8 of a stored wind turbine blade 2. In addition to the supporting segment 7, the handling tool 1 comprises two or more base segments 19, to which the supporting segment 7 is attached. The protection pad 17 is deformed in such manner that it accommodates one or more vanes 15 of the vortex generator 14 of the supported wind turbine blade 2.

The depictions in the figures are only schematically and in particular not drawn to scale. It is possible that the handling tool 1 comprises other than the depicted structures and geometries. It is in particular possible that the handling tool 1 is a turning yoke, a clamp, a sling and/or a wind turbine blade fixture instead. In addition or alternatively to the described vanes 15 of the vortex generator 14, other add-on elements 12, which protrude from the outer surface 9 of the wind turbine blade 2, may be accommodated in the deformed protection pad 17.

In an embodiment of a method for handling of a wind turbine blade 2 comprising at least one blade add-on element 12 protruding from a surface portion 8 of an outer surface 9 of the blade 2, a handling tool 1, for example according to one of the aforementioned embodiments, may be used. The protection pad 17 is arranged between the supporting segment 7 and the wind turbine blade 2, for instance by attaching the protection pad 17 to the supporting segment 7. When the wind turbine blade 2 is supported on the handling tool 1, or when the surface portion 8 of the blade is supported on the supporting segment 7, or the protection pad 17, respectively, the protection pad 17 is deformed in such manner that the blade add-on element 12 is completely accommodated in the deformed protection pad 17.

The usage of the protection pad 17 for the blade handling and/or as part of the handling tool 1, respectively, reduces the risk of damaging the add-on elements 12 during base handling, in particular during lifting, turning, transportation, installation and/or storage of the wind turbine blade 2. The protection pad 17, or the plurality of protection pads 17, respectively, is able to handle the loads occurring during the blade handling process.

Furthermore, the design of the wind turbine blade 2 is not constrained with regard to the positioning of the add-on elements 12, in particular of the vortex generators 14. In particular, an arrangement of the add-on elements 12 in one or more surface regions 8, which are used for supporting the wind turbine blade 2 during the handling procedures, is possible. Therefore, the add-on elements 12 may be attached to the blade 2 in the optimal positions for obtaining the desired aerodynamic properties of the wind turbine blade 2 so that the wind turbine blade 2 may be operated with good efficiency in all conditions. The usage of the protection pad 17 facilitates the handling of the wind turbine blade 2, since no additional care needs to be taken during handling to avoid damage to the add-on elements 12, since they are protected by the protection pad 17.

In particular, a blade handling operation like an installation of the blade can be conducted faster, since less time is required to take special care for avoiding the add-on elements 12 to be damaged. This reduces the installation time and avoids additional manpower spent on repairing damaged add-on elements 12, in particular of damaged vortex generator vanes 15. Furthermore, also an installation of the add-on elements 12 after mounting of the wind turbine blade 2 to the hub 4 of the wind turbine 3 may be avoided. This advantageously reduces the down time of the wind turbine 3, as well as the installation time and therefore reduces an energy production loss of the wind turbine 3.

Although the present invention has been described in detail with reference to the preferred embodiment, the present invention is not limited by the disclosed examples from which the skilled person is able to derive other variations without departing from the scope of the invention.

## Claims

1. Wind turbine blade handling tool comprising at least one supporting segment (7) for supporting a surface portion (8) of an outer surface (9) of the blade (2) during handling of the wind turbine blade (2), wherein the supporting segment (7) comprises at least one deformable protection pad (17), which is deformable in such manner that at least one blade add-on element (12) protruding from the supported surface portion (8) is completely accommodated in the deformed protection pad (17).

2. Wind turbine blade handling tool according to claim 1, **characterized in that** the protection pad (17) comprises a material, which is elastically deformable and/or permanently deformable by the add-on element (12) of the supported surface portion (8).

3. Wind turbine blade handling tool according to claim 1 or 2, **characterized in that** the protection pad (17) consists of an expanded polymer material.

4. Wind turbine blade handling tool according to claim 3, **characterized in that** the protection pad (17) consists of polyurethane and/or polystyrene.

5. Wind turbine blade handling tool according to one of the preceding claims, **characterized in that** the protection pad (17) comprises a thickness between 10mm and 150mm, in particular between 40mm and 100mm.

6. Wind turbine blade handling tool according to one of the preceding claims, **characterized in that** the supporting segment (7) is covered by the protection pad (17).

7. Wind turbine blade handling tool according to one of the preceding claims, **characterized in that** the protection pad (17) is releasably attached on the supporting segment (7) .

8. Wind turbine blade handling tool according to one of the preceding claims, **characterized in that** the protection pad (17) is deformable in such manner that at least one vane (15) of a vortex generator (14) is completely accommodated in the deformed protection pad (17).

9. Wind turbine blade handling tool according to one of the preceding claims, **characterized in that** the wind turbine blade handling tool (1) is a lifting yoke, a turning yoke, a clamp, a sling, a wind turbine blade fixture and/or a wind turbine blade storage support element.

10. Method for handling of a wind turbine blade (2) comprising at least one blade add-on element (12) protruding from a surface portion (8) of an outer surface (9) of the blade (2), wherein a wind turbine blade handling tool (1) comprising a supporting segment (7) for supporting the surface portion (17) of the blade (2) during handling is used, wherein a protection pad (17) is arranged on the supporting segment (7), wherein the protection pad (17) is deformed in such manner that the blade add-on element (12) is completely accommodated in the deformed protection pad (17).
